# EUROPÄISCHE PATENTSCHRIFT

(11) **EP 3 717 312 B1**
(45) Veröffentlichungstag und Bekanntmachung des Hinweises auf die Patenterteilung: **08.12.2021**
(21) Anmeldenummer: 18789384.7
(22) Anmeldetag: 17.10.2018
(51) Int. Cl.: B60S 1/40, B60S 1/52

(54) **WISCHARMSPRÜHVORRICHTUNG**
WIPER ARM SPRAYING DEVICE
DISPOSITIF D'ASPERSION DE BRAS D'ESSUIE-GLACE

(30) Priorität: 28.11.2017 DE 102017221310
(43) Veröffentlichungstag der Anmeldung: 07.10.2020
(73) Patentinhaber: Robert Bosch GmbH, 70442 Stuttgart (DE)
(72) Erfinder: BRATEC, Herve, 3012 WILSELE (BE); HORVATH, Zsofia, 8175 Balatonfuezfo (HU); HORNYAK, Mate, 8095 Pakozd (HU); UGRON, Adam, 1224 Budapest (HU)
(86) Internationale Anmeldenummer: PCT/EP2018/078394
(87) Internationale Veröffentlichungsnummer: WO 2019/105647

(56) Entgegenhaltungen:
- EP-A1- 3 115 265
- DE-A1- 19 912 975
- DE-A1-102013 209 196
- DE-A1-102015 216 699
- FR-A1- 2 781 743
- US-A1- 2017 232 938

## Beschreibung

### Stand der Technik

Es ist bereits eine Wischarmsprühvorrichtung zu einer Kopplung mit einem Wischarm, mit zumindest einer Ventileinheit, welche zu einer Versorgung einer Düseneinheit mit Wischflüssigkeit vorgesehen ist, vorgeschlagen worden. Weiterer Stand der Technik ist aus der DE 199 12 975 A1, der US 2017/232938 A1, der DE 10 2015 216699 A1 und der FR 2 781 743 A1 bekannt.

### Offenbarung der Erfindung

Die Erfindung geht aus von einer Wischarmsprühvorrichtung zu einer Kopplung mit einem Wischarm, mit zumindest einer Ventileinheit, welche zu einer Versorgung einer Düseneinheit mit Wischflüssigkeit vorgesehen ist.

Nach der Erfindung ist die Ventileinheit dazu vorgesehen, in eine Wischarmschlaucheinheit integriert zu werden. Vorzugsweise ist die Ventileinheit zwischen zwei Wischarmschlauchelementen der Wischarmschlaucheinheit angeordnet. Bevorzugt ist die Ventileinheit mit gegenüberliegenden Enden mit jeweils einem der Wischarmschlauchelemente gekoppelt. Vorzugsweise ist zwischen der Ventileinheit und der Düseneinheit ein Wischarmschlauchelement der Wischarmeinheit angeordnet. Besonders bevorzugt bildet die Wischarmschlaucheinheit einen Teil der Wischarmsprühvorrichtung. Vorzugsweise dient die Ventileinheit zudem als Schlauchhalter.

Unter einer "Wischarmsprühvorrichtung" soll in diesem Zusammenhang insbesondere eine Vorrichtung verstanden werden, die zu einer Anordnung an einem Wischarm vorgesehen ist. Vorzugsweise soll darunter insbesondere eine Vorrichtung verstanden werden, die in zumindest einem Betriebszustand zu einer Reinigung einer Fahrzeugscheibe dazu vorgesehen ist, Wischflüssigkeit zu einem Wischarm zu leiten und auf eine Fahrzeugscheibe aufzutragen. Ferner soll in diesem Zusammenhang unter einer "Ventileinheit" insbesondere eine Einheit verstanden werden, die zumindest ein Ventil und/oder zumindest ein Ventilbauteil umfasst. Vorzugsweise soll darunter eine Einheit verstanden werden, die zu einer Steuerung und/oder einer Regelung eines Durchflusses von Fluiden, insbesondere von Flüssigkeiten, besonders bevorzugt von Wischflüssigkeit, vorgesehen ist. Besonders bevorzugt soll darunter eine Einheit verstanden werden, die dazu vorgesehen ist, eine Durchflussmenge, eine Durchflussrichtung und/oder einen allgemeinen Durchfluss zu steuern und/oder zu regeln. Unter einer "Düseneinheit" soll in diesem Zusammenhang insbesondere eine Einheit verstanden werden, die zumindest ein Düsenelement umfasst. Bevorzugt umfasst die Düseneinheit zumindest zwei Düsenelemente. Dabei soll unter einem "Düsenelement" in diesem Zusammenhang insbesondere ein Element verstanden werden, das dazu vorgesehen ist, Wischflüssigkeit auszubringen beziehungsweise in eine bestimmte Richtung zu sprühen. Insbesondere weist das Düsenelement zumindest eine Düsenöffnung auf, die ein Waschwassersystem zu einer Umgebung hin öffnet. Das Düsenelement kann aus einem Metall und/oder besonders vorteilhaft aus einem Kunststoff hergestellt sein. Bevorzugt ist das Düsenelement dazu vorgesehen, mit einem Wischarmschlauchelement der Wischarmschlaucheinheit gekoppelt zu werden.

Unter einer "Wischarmschlaucheinheit" soll in diesem Zusammenhang insbesondere eine Einheit verstanden werden, die zu einer Führung von Wischflüssigkeit vorgesehen ist. Vorzugsweise ist die Einheit zumindest dazu vorgesehen, Wischflüssigkeit von einer Pumpe und/oder einem Wischflüssigkeitstank zu der Ventileinheit zu führen und/oder Wischflüssigkeit von der Ventileinheit zu der Düseneinheit zu führen. Bevorzugt umfasst die Wischarmschlaucheinheit zumindest ein einen Flüssigkeitskanal ausbildendes Wischarmschlauchelement. Das Wischarmschlauchelement kann dabei sowohl von einem flexiblen Schlauch als auch von einem formfesten Rohr gebildet sein. Es sind verschiedene, einem Fachmann als sinnvoll erscheinende Ausbildungen des Wischarmschlauchelements denkbar. Grundsätzlich wäre auch denkbar, dass das Wischarmschlauchelement von einer in einem weiteren Bauteil eingebrachten Ausnehmung, wie beispielsweise in einer Wischstange des Wischarms, gebildet ist. Ferner soll in diesem Zusammenhang unter "integriert" insbesondere verstanden werden, dass die Ventileinheit zumindest strömungstechnisch in die Wischarmschlaucheinheit integriert ist, also insbesondere Wischflüssigkeit während einer Durchströmung der Wischarmschlaucheinheit zumindest temporär die Ventileinheit durchströmt. Vorzugsweise soll darunter insbesondere eine Anordnung der Ventileinheit verstanden werden, bei welcher Wischflüssigkeit in zumindest einem Betriebszustand insbesondere zuerst die Wischarmschlaucheinheit, anschließend die Ventileinheit und anschließend wieder die Wischarmschlaucheinheit durchströmt. Besonders bevorzugt soll darunter insbesondere verstanden werden, dass die Ventileinheit zwischen zwei Wischarmschlauchelementen der Wischarmschlaucheinheit angeordnet ist und insbesondere jeweils mit gegenüberliegenden Enden mit jeweils einem der Wischarmschlauchelemente gekoppelt ist.

Durch die erfindungsgemäße Ausgestaltung der Wischarmsprühvorrichtung kann insbesondere eine vorteilhaft kompakte Anordnung der Ventileinheit erreicht werden. Es kann insbesondere eine von der Düseneinheit beabstandete Anordnung der Ventileinheit erreicht werden. Vorzugsweise kann die Wischarmsprühvorrichtung vorteilhaft kompakt und insbesondere flachbauend ausgebildet werden. Hierdurch kann insbesondere eine vorteilhafte Aerodynamik der Wischarmsprühvorrichtung bereitgestellt werden. Es kann insbesondere ein vorteilhaftes Wischverhalten erreicht werden, insbesondere auch bei hohen Geschwindigkeiten. Ferner kann insgesamt ein vorteilhaftes hydraulisches Verhalten erreicht werden.

Nach der Erfindung weist die Wischarmsprühvorrichtung eine Düseneinheit auf, welche zu einem Aufbringen von Wischflüssigkeit auf eine Fahrzeugscheibe vorgesehen ist, wobei die Ventileinheit ein Gehäuse aufweist, welches getrennt von einem Gehäuse der Düseneinheit ausgebildet ist. Vorzugsweise sind die Ventileinheit und die Düseneinheit zumindest strömungstechnisch lediglich über ein Wischarmschlauchelement der Wischarmschlaucheinheit verbunden. Das Gehäuse der Ventileinheit ist insbesondere zumindest zu einer Aufnahme eines Ventils der Ventileinheit vorgesehen. Vorzugsweise ist das Gehäuse der Ventileinheit von einem Kunststoffgehäuse gebildet. Das Gehäuse der Ventileinheit ist insbesondere zumindest zu einer Aufnahme und/oder Lagerung der Düsenelemente der Düseneinheit vorgesehen. Vorzugsweise ist das Gehäuse der Düseneinheit von einem Kunststoffgehäuse gebildet. Dadurch kann insbesondere eine vorteilhafte, getrennte Anordnung der Ventileinheit und der Düseneinheit erreicht werden. Es kann insbesondere eine von der Düseneinheit beabstandete Anordnung der Ventileinheit erreicht werden. Vorzugsweise kann die Ventileinheit dadurch insbesondere vorteilhaft platzsparend angeordnet werden.

Des Weiteren wird vorgeschlagen, dass die Ventileinheit zumindest ein Kopplungselement aufweist, welches zu einer Kopplung der Ventileinheit mit einer Wischstange des Wischarms vorgesehen ist. Vorzugsweise ist das Kopplungselement dazu vorgesehen, die Ventileinheit an der Wischstange des Wischarms zu befestigen. Bevorzugt ist das Kopplungselement insbesondere zumindest zu einer formschlüssigen Fixierung der Ventileinheit an der Wischstange vorgesehen. Besonders bevorzugt ist das Kopplungselement dazu vorgesehen, die Wischstange zumindest zu einem Großteil, also insbesondere über zumindest 50%, vorzugsweise über zumindest 60% und besonders bevorzugt über zumindest 80% eines Umfangs, zu umgreifen. Unter einem "Kopplungselement" soll in diesem Zusammenhang insbesondere ein Element verstanden werden, welches zu einer Fixierung einer zugeordneten Einheit an einem weiteren Bauteil vorgesehen ist. Vorzugsweise ist das Kopplungselement zu einer direkten Verbindung mit einem weiteren Bauteil vorgesehen. Eine Verbindung kann dabei beispielsweise durch Umgreifen, Eingreifen, Verrasten und/oder Verschrauben erfolgen. Grundsätzlich sind jedoch auch andere, einem Fachmann als sinnvoll erscheinende, insbesondere zumindest formschlüssige, Verbindungsmethoden denkbar. Dadurch kann insbesondere eine vorteilhafte Anbindung der Ventileinheit an den Wischarm erreicht werden. Es kann insbesondere eine vorteilhafte direkte Anbindung erreicht werden. Vorzugsweise kann die Ventileinheit dadurch vorteilhaft an einer kompakten Wischstange befestigt werden, wodurch eine Bauhöhe des Wischarm nicht oder nur geringfügig erhöht wird.

Zudem wird vorgeschlagen, dass das Kopplungselement der Ventileinheit einstückig mit dem Gehäuse der Ventileinheit ausgebildet ist. Vorzugsweise ist das Kopplungselement an das Gehäuse der Ventileinheit angeformt. Besonders bevorzugt bildet das Gehäuse der Ventileinheit zumindest einen Teilbereich eines Aufnahmebereichs zu einer Aufnahme der Wischstange des Kopplungselements aus. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine vorteilhaft sichere Montage erreicht werden. Ferner kann insbesondere eine Anzahl an Bauteilen gering gehalten werden. Es kann insbesondere eine vorteilhaft kompakte Ventileinheit bereitgestellt werden.

Nach der Erfindung weist die Düseneinheit zumindest ein Kopplungselement auf, welches zu einer Kopplung der Düseneinheit mit einem Wischarmadapter des Wischarms vorgesehen ist. Vorzugsweise ist das Kopplungselement dazu vorgesehen, die Düseneinheit an dem Wischarmadapter des Wischarms zu befestigen. Bevorzugt ist das Kopplungselement insbesondere zumindest zu einer formschlüssigen Fixierung der Düseneinheit an dem Wischarmadapter vorgesehen. Besonders bevorzugt ist das Kopplungselement dazu vorgesehen, in eine Ausnehmung, insbesondere eine Nut, des Wischarmadapters einzugreifen. Unter einem "Wischarmadapter" soll in diesem Zusammenhang insbesondere ein Adapter verstanden werden, der einen Kontaktbereich zu einem Wischarmbauteil, insbesondere der Wischstange, aufweist und mit dem Wischarmbauteil unverlierbar verbunden und dazu vorgesehen ist, einen Kopplungsbereich des Wischarmbauteils für eine Kopplung und/oder Kontaktierung mit einem Wischblattadapter bereitzustellen. Dadurch kann insbesondere eine vorteilhafte Anbindung der Düseneinheit an den Wischarm erreicht werden. Ferner kann dadurch insbesondere eine vorteilhafte, insbesondere zentrale, Anordnung der Düseneinheit erreicht werden. Durch die Trennung der Düseneinheit von der Ventileinheit kann die Düseneinheit insbesondere vorteilhaft kompakt und aerodynamisch geformt sein.

Es wird weiter vorgeschlagen, dass das Kopplungselement der Düseneinheit von einer Fixierrippe gebildet ist, welche dazu vorgesehen ist, in eine Fixiernut des Wischarmadapters des Wischarms einzugreifen. Vorzugsweise ist die Fixierrippe von einer Schwalbenschwanzfixierrippe gebildet, welche einen schwalbenschwanzförmigen Querschnitt aufweist. Besonders bevorzugt ist die Fixiernut von einer Schwalbenschwanzfixiernut gebildet, welche ebenfalls einen schwalbenschwanzförmigen Querschnitt aufweist. Bevorzugt wird die Düseneinheit bei einer Montage parallel zu einer Haupterstreckungsrichtung der Fixierrippe auf den Wischarmadapter aufgeschoben. Unter einer "Fixierrippe" soll in diesem Zusammenhang insbesondere eine eine Feder einer Nut-Feder-Verbindung ausbildende Rippe verstanden werden. Vorzugsweise ist die Rippe dazu vorgesehen, zumindest teilweise formschlüssig in eine Nut, insbesondere eine Fixiernut, einzugreifen. Besonders bevorzugt bildet die Fixiernut einen Hinterschnitt aus, welchen die Fixierrippe hintergreift. Vorzugsweise kann die Fixierrippe daher lediglich parallel zu einer Haupterstreckungsrichtung der Fixierrippe in die Fixiernut eingeschoben werden. Dadurch kann insbesondere eine vorteilhaft sichere und trotz allem leicht herzustellende Verbindung zwischen der Düseneinheit und dem Wischarmadapter bereitgestellt werden.

Nach der Erfindung weist die Düseneinheit zumindest ein weiteres Kopplungselement auf, welches zu einer Kopplung der Düseneinheit mit einer Wischstange des Wischarms vorgesehen ist. Vorzugsweise ist das weitere Kopplungselement dazu vorgesehen, die Düseneinheit an der Wischstange des Wischarms zu befestigen. Bevorzugt ist das weitere Kopplungselement insbesondere zumindest zu einer formschlüssigen Fixierung der Düseneinheit an der Wischstange vorgesehen. Besonders bevorzugt ist das weitere Kopplungselement dazu vorgesehen, die Wischstange zumindest zu einem Großteil, also insbesondere über zumindest 50%, vorzugsweise über zumindest 60% und besonders bevorzugt über zumindest 80% eines Umfangs, zu umgreifen. Bevorzugt ist das weitere Kopplungselement einstückig mit dem Gehäuse der Düseneinheit ausgebildet. Vorzugsweise ist das weitere Kopplungselement an das Gehäuse der Düseneinheit angeformt. Dadurch kann insbesondere eine weitere, zusätzliche Anbindung der Düseneinheit an den Wischarm bereitgestellt werden. Es kann insbesondere eine vorteilhaft sichere Anbindung der Düseneinheit bereitgestellt werden.

Des Weiteren wird vorgeschlagen, dass die Ventileinheit zumindest ein als Entenschnabelventil ausgebildetes Ventil umfasst. Unter einem "Entenschnabelventil" soll in diesem Zusammenhang insbesondere ein Ventil verstanden werden, das wie der Schnabel einer Ente geformt ist. Vorzugsweise weist das Ventil auf einer Einlassseite einen ringförmigen Querschnitt auf, der zu einer Auslassseite hin abflacht und in einen zumindest annähernd rechteckigen Querschnitt übergeht. In einem entspannten Zustand des Ventils liegen eine Oberseite und eine Unterseite des rechteckigen Querschnitts insbesondere aneinander an, sodass das Ventil geschlossen ist. Besonders bevorzugt öffnet sich das abgeflachte Ende des Ventils, wenn ein Fluid auf einer Einlassseite in das Ventil gepumpt wird, um das unter Druck stehende Fluid passieren zu lassen. Wenn der Druck jedoch entfernt wird, kehrt das abgeflachte Ende zu seiner abgeflachten rechteckigen Form zurück, wodurch ein Rückfluss verhindert wird. Vorzugsweise besteht das Ventil aus einem Gummi oder einem synthetischen Elastomer. Grundsätzlich sind jedoch auch andere Materialien und/oder Materialkombinationen denkbar. Dadurch kann insbesondere ein vorteilhaft kompaktes und zuverlässiges Ventil bereitgestellt werden.

Ferner geht die Erfindung aus von einem System mit einem Wischarm und mit einer Wischarmsprühvorrichtung. Es wird vorgeschlagen, dass eine Form eines Gehäuses einer Düseneinheit der Wischarmsprühvorrichtung in einem montierten Zustand der Düseneinheit zumindest teilweise in eine Form eines Wischarmadapters des Wischarms übergeht. Vorzugsweise weist das Gehäuse der Düseneinheit in einem Übergangsbereich, in welchem die Düseneinheit an den Wischarmadapter angrenzt, zumindest eine Fläche auf, welche sich in dem Übergangsbereich parallel zu einer angrenzenden Fläche des Wischarmadapters erstreckt. Bevorzugt beträgt ein vertikaler Versatz zwischen der Düseneinheit und dem Wischarmadapter weniger als 6 mm, vorzugsweise weniger als 4 mm und besonders bevorzugt weniger als 2 mm. Dadurch kann insbesondere eine vorteilhafte Aerodynamik bereitgestellt werden. Es kann ferner ein einheitliches und harmonisches Erscheinungsbild geschaffen werden. Vorzugsweise kann insbesondere eine vorteilhafte Integration der Düseneinheit in ein aerodynamisches Design des Systems, insbesondere des Wischarms, erreicht werden. Vorzugsweise wird durch die Düseneinheit eine Höhe des Systems gegenüber einer Höhe des Wischarms, insbesondere des Wischarmadapters, nicht erhöht. Eine aerodynamische Auswirkung der Düseneinheit kann gering gehalten werden.

Des Weiteren wird vorgeschlagen, dass die Düseneinheit der Wischarmsprühvorrichtung zumindest teilweise einstückig mit dem Wischarmadapter des Wischarms ausgebildet ist. Vorzugsweise ist die Düseneinheit der Wischarmsprühvorrichtung fest an den Wischarmadapter des Wischarms angebunden. Bevorzugt werden die Düseneinheit und der Wischarmadapter gemeinsam mit einer Wischstange des Wischarms gekoppelt. Alternativ wäre daher auch denkbar, dass die Düseneinheit und der Wischarmadapter lediglich eine Baugruppe ausbilden. Dadurch kann insbesondere eine vorteilhaft einfache und schnelle Montage erreicht werden. Es kann ferner eine zuverlässige Anordnung der Düseneinheit erreicht werden. Des Weiteren kann eine Anzahl von Bauteilen gering gehalten werden.

Es wird ferner vorgeschlagen, dass die Ventileinheit der Wischarmsprühvorrichtung in Strömungsrichtung vor dem Wischarmadapter angeordnet ist. Vorzugsweise ist die Ventileinheit der Wischarmsprühvorrichtung in Strömungsrichtung der Wischflüssigkeit vor dem Wischarmadapter angeordnet ist. Besonders bevorzugt ist die Ventileinheit der Wischarmsprühvorrichtung an einer Wischstange des Wischarms angeordnet. Dadurch kann insbesondere eine vorteilhaft kompakte Anordnung der Ventileinheit erreicht werden.

Es wird weiter vorgeschlagen, dass ein minimaler Abstand zwischen der Ventileinheit und dem Wischarmadapter zumindest 1 cm beträgt. Vorzugsweise beträgt ein minimaler Abstand zwischen der Ventileinheit und dem Wischarmadapter zumindest 2 cm, vorzugsweise zumindest 3 cm und besonders bevorzugt zumindest 4 cm. Dadurch kann insbesondere eine vorteilhaft beabstandete Anordnung der Ventileinheit von dem Wischarmadapter erreicht werden. Hierdurch kann wiederum eine hohe Kompaktheit im Bereich des Wischarmadapters erreicht werden. Es kann insbesondere insgesamt ein vorteilhaft flachbauendes System bereitgestellt werden. Hierdurch kann eine vorteilhafte Aerodynamik erreicht werden.

Die erfindungsgemäße Wischarmsprühvorrichtung sowie das System sollen hierbei nicht auf die oben beschriebene Anwendung und Ausführungsform beschränkt sein. Insbesondere können die erfindungsgemäße Wischarmsprühvorrichtung sowie das System zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein System mit einem Wischarm und mit einer erfindungsgemäßen Wischarmsprühvorrichtung, welche eine Ventileinheit und eine Düseneinheit aufweist, und ein Wischblatt in einer schematischen Darstellung,
- Fig. 2: einen Teilausschnitt des Systems mit dem Wischarm und mit der erfindungsgemäßen Wischarmsprühvorrichtung und das Wischblatt in einer schematischen Draufsicht,
- Fig. 3: einen Teilausschnitt des Systems mit dem Wischarm und mit der erfindungsgemäßen Wischarmsprühvorrichtung und das Wischblatt in einer schematischen Seitenansicht,
- Fig. 4: einen Teilausschnitt des Systems mit dem Wischarm und mit der erfindungsgemäßen Wischarmsprühvorrichtung und das Wischblatt in einer schematischen Seitenansicht,
- Fig. 5: einen Teilausschnitt des Systems mit dem Wischarm und mit der erfindungsgemäßen Wischarmsprühvorrichtung und das Wischblatt in einer schematischen Draufsicht,
- Fig. 6: die Ventileinheit der erfindungsgemäßen Wischarmsprühvorrichtung in einer schematischen Explosionsdarstellung,
- Fig. 7: einen Teilausschnitt des Systems mit dem Wischarm und mit der erfindungsgemäßen Wischarmsprühvorrichtung in einer schematischen Explosionsdarstellung
- Fig. 8: ein Wischarmadapter des Wischarms des Systems in einer schematischen Darstellung,
- Fig. 9: die Düseneinheit der erfindungsgemäßen Wischarmsprühvorrichtung in einer schematischen Darstellung,
- Fig. 10: der Wischarmadapter des Wischarms und die Düseneinheit der erfindungsgemäßen Wischarmsprühvorrichtung in einer schematischen Schnittdarstellung und
- Fig. 11: einen Teilausschnitt eines alternativen Systems mit einem Wischarm und mit einer alternativen erfindungsgemäßen Wischarmsprühvorrichtung in einer schematischen Explosionsdarstellung.

### Beschreibung der Ausführungsbeispiele

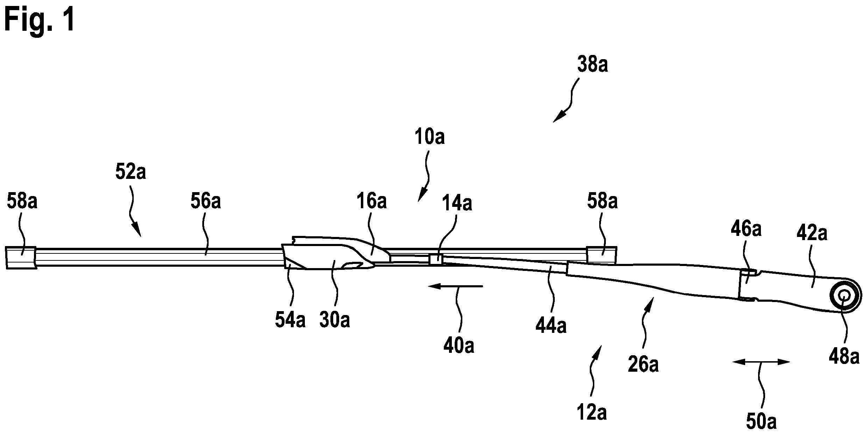

Figur 1 zeigt ein System 38a mit einem Wischarm 12a und mit einer Wischarmsprühvorrichtung 10a. Ferner zeigt die Figur 1 ein Wischblatt 52a, das mit dem Wischarm 12a gekoppelt ist.

Der Wischarm 12a weist eine Wischstange 26a auf. Die Wischstange 26a weist zwei Wischarmsegmente 42a, 44a und ein Scharnier 46a auf. Die Wischarmsegmente 42a, 44a sind über das Scharnier 46a verbunden. Ferner ist im Bereich des Scharniers 46a ein nicht weiter sichtbares Federelement angeordnet. Das nicht weiter sichtbare Federelement ist dazu vorgesehen, in einem Andrückbereich des zweiten Wischarmsegments 44a das zweite Wischarmsegment 44a in Richtung einer Fahrzeugscheibe zu drücken. Das erste Wischarmsegment 42a ist über eine Achse 48a mit dem nicht weiter sichtbaren Kraftfahrzeug verbunden. Die Achse 48a ist, entlang einer Haupterstreckungsrichtung 50a des Wischarms 12a betrachtet, an einem äußeren Ende des Wischarms 12a mit der Wischstange 26a verbunden. Die Achse 48a wird über einen nicht weiter sichtbaren Antriebsmotor angetrieben. An einem dem Scharnier 46a abgewandten Ende des zweiten Wischarmsegments 44a ist ein Wischarmadapter 30a angeordnet. Der Wischarmadapter 30a ist zur Aufnahme eines Wischblattadapters 54a des Wischblatts 52a vorgesehen. Der Wischarmadapter 30a nimmt den Wischblattadapter 54a auf.

Das Wischblatt 52a weist den Wischblattadapter 54a auf. Das Wischblatt 52a weist den Wischblattadapter 54a zur Kopplung mit dem Wischarm 12a auf. Ferner weist das Wischblatt 52a eine Windabweisereinheit 56a, zwei nicht weiter sichtbare Federschienen, eine nicht weiter sichtbare Wischlippe und zwei Endkappen 58a, wovon lediglich eine sichtbar ist, auf. Das Wischblatt 52a wischt in einem Betriebszustand über die Fahrzeugscheibe. Die nicht weiter sichtbare Wischlippe des Wischblatts 52a ist während eines Wischbetriebszustands dazu vorgesehen, an der Fahrzeugscheibe anzuliegen und über diese zu wischen. Die nicht weiter sichtbare Wischlippe ist über die nicht weiter sichtbaren Federschienen in der Windabweisereinheit 56a gehalten. Grundsätzlich wäre jedoch auch ein anderer, einem Fachmann als sinnvoll erscheinender Aufbau des Wischblatts 52a denkbar. Beispielsweise wäre denkbar, dass die Windabweisereinheit 56a und die nicht weiter sichtbare Wischlippe einstückig ausgebildet sind.

Die Wischarmsprühvorrichtung 10a ist zu einer Reinigung der Fahrzeugscheibe vorgesehen. Die Wischarmsprühvorrichtung 10a ist zu einer Reinigung zu einem Aufbringen und/oder Verteilen von Wischflüssigkeit auf die Fahrzeugscheibe vorgesehen. Ferner ist die Wischarmsprühvorrichtung 10a zu einer Kopplung mit dem Wischarm 12a vorgesehen. Die Wischarmsprühvorrichtung 10a weist eine Ventileinheit 14a auf. Ferner weist die Wischarmsprühvorrichtung 10a eine Düseneinheit 16a auf.

Die Ventileinheit 14a ist zu einer Versorgung der Düseneinheit 16a mit Wischflüssigkeit vorgesehen. Die Ventileinheit 14a umfasst ein Ventil 36a. Die Ventileinheit 14a umfasst ein als Entenschnabelventil ausgebildetes Ventil 36a. Grundsätzlich wäre jedoch auch eine andere, einem Fachmann als sinnvoll erscheinende Ausbildung des Ventils 36a denkbar. Das Ventil 36a ist dazu vorgesehen, einen Rückfluss der Wischflüssigkeit nach Beenden eines Sprühvorgangs zu verhindern. Das Ventil 36a dient als eine Art Rückschlagventil. Zudem wäre denkbar, dass über das Ventil 36a ein Durchfluss gesteuert wird. Die Ventileinheit 14a ist von einer separaten Baueinheit gebildet. Die Ventileinheit 14a weist ein Gehäuse 20a auf. Das Gehäuse 20a ist von einem separaten, der Ventileinheit 14a zugeordneten Gehäuse gebildet. Das Gehäuse 20a ist von einem Kunststoffgehäuse gebildet. Ferner nimmt das Gehäuse 20a das Ventil 36a auf.

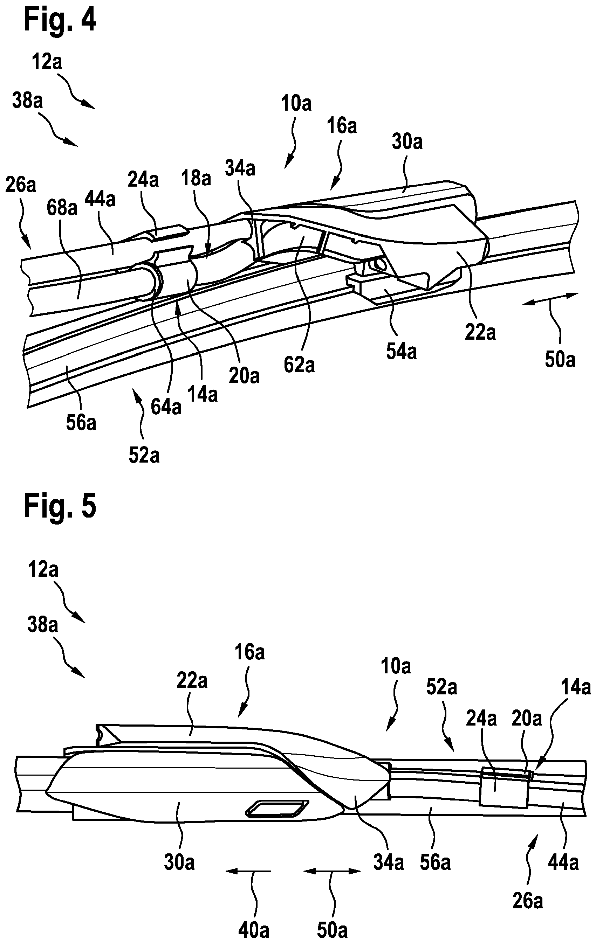

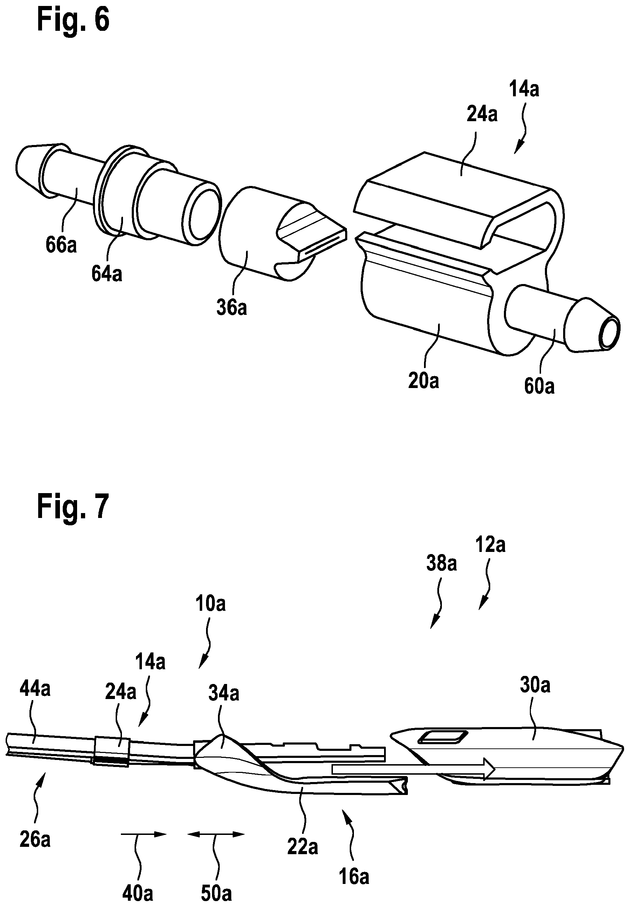

Das Gehäuse 20a weist einen nicht weiter sichtbaren Aufnahmebereich auf, in welchem das Ventil 36a aufgenommen ist. Der Aufnahmebereich des Gehäuses 20a bildet zudem einen Kanal zu einer Führung der Wischflüssigkeit innerhalb der Ventileinheit 14a aus. Ferner weist das Gehäuse 20a einen in den Aufnahmebereich mündenden Anschlussstutzen 60a zu einem Anschluss eines Wischarmschlauchelements 62a auf. Der Anschlussstutzen 60a bildet eine Auslassseite der Ventileinheit 14a. Des Weiteren weist die Ventileinheit 14a eine Abschlusskappe 64a auf. Die Abschlusskappe 64a ist auf einer dem Anschlussstutzen 60a angewandten Seite des Aufnahmebereichs angeordnet und dient zu einem Abschluss des Aufnahmebereichs. Ferner ist die Abschlusskappe 64a zu einer teilweisen Aufnahme des Ventils 36a vorgesehen. Das Ventil 36a ist auf ein Ende der Abschlusskappe 64a, welches in den Aufnahmebereich ragt, auf die Abschlusskappe 64a aufgesteckt. Die Abschlusskappe 64a ist in den Aufnahmebereich des Gehäuses 20a eingesteckt. Ferner weist die Abschlusskappe 64a ebenfalls einen in den Aufnahmebereich mündenden Anschlussstutzen 66a zu einem Anschluss eines Wischarmschlauchelements 68a auf. Der Anschlussstutzen 66a bildet eine Einlassseite der Ventileinheit 14a (Figur 4, 6).

Die Ventileinheit 14a ist dazu vorgesehen, in eine Wischarmschlaucheinheit 18a integriert zu werden. Die Wischarmschlaucheinheit 18a weist die Wischarmschlauchelemente 62a, 68a auf. Die Ventileinheit 14a ist zwischen den Wischarmschlauchelementen 62a, 68a und der Wischarmschlaucheinheit 18a angeordnet. Die Ventileinheit 14a ist zwischen den Wischarmschlauchelementen 62a, 68a geschaltet (Figur 4, 6).

Ferner weist die Ventileinheit 14a ein Kopplungselement 24a auf. Das Kopplungselement 24a ist zu einer Kopplung der Ventileinheit 14a mit einer Wischstange 26a des Wischarms 12a vorgesehen. Das Kopplungselement 24a ist von einem Clip gebildet. Das Kopplungselement 24a ist von einem C-förmigen Clip gebildet, der zu einem Umgreifen der Wischstange 26a des Wischarms 12a vorgesehen ist. Das Kopplungselement 24a bildet dazu einen Aufnahmebereich zu einer Aufnahme der Wischstange 26a aus. Das Kopplungselement 24a ist zu einer Kopplung mit dem zweiten Wischarmsegment 44a vorgesehen. Das Kopplungselement 24a der Ventileinheit 14a ist einstückig mit dem Gehäuse 20a der Ventileinheit 14a ausgebildet. Das Gehäuse 20a der Ventileinheit 14a bildet einen Teilbereich des Aufnahmebereichs zu einer Aufnahme der Wischstange 26a des Kopplungselements 24a aus. Eine Oberseite des Gehäuses 20a grenzt direkt an den Aufnahmebereich des Kopplungselements 24a an (Figur 4, 6).

Die Ventileinheit 14a dient dabei zudem als Schlauchhalter, welche die Wischarmschlaucheinheit 18a an der Wischstange 26a befestigt. Die Ventileinheit 14a verbindet daher die Funktion eines Schlauchhalters und eines Ventils.

Die Ventileinheit 14a der Wischarmsprühvorrichtung 10a ist in Strömungsrichtung 40a vor dem Wischarmadapter 30a angeordnet. Die Ventileinheit 14a der Wischarmsprühvorrichtung 10a ist in Strömungsrichtung 40a vor dem Wischarmadapter 30a an der Wischstange 26a angeordnet. Ein minimaler Abstand zwischen der Ventileinheit 14a und dem Wischarmadapter 30a beträgt zumindest 1 cm, vorzugsweise zumindest 2 cm, bevorzugt zumindest 3 cm und besonders bevorzugt zumindest 4 cm. Vorzugsweise kann ein minimaler Abstand zwischen der Ventileinheit 14a und dem Wischarmadapter 30a variiert werden. Mit zunehmendem Abstand wird auf der einen Seite insbesondere eine Wirkung bzw. eine Reaktionsgeschwindigkeit des Ventils 36a verschlechtert und auf der anderen Seite eine kompakte Anordnung verbessert (Figur 5).

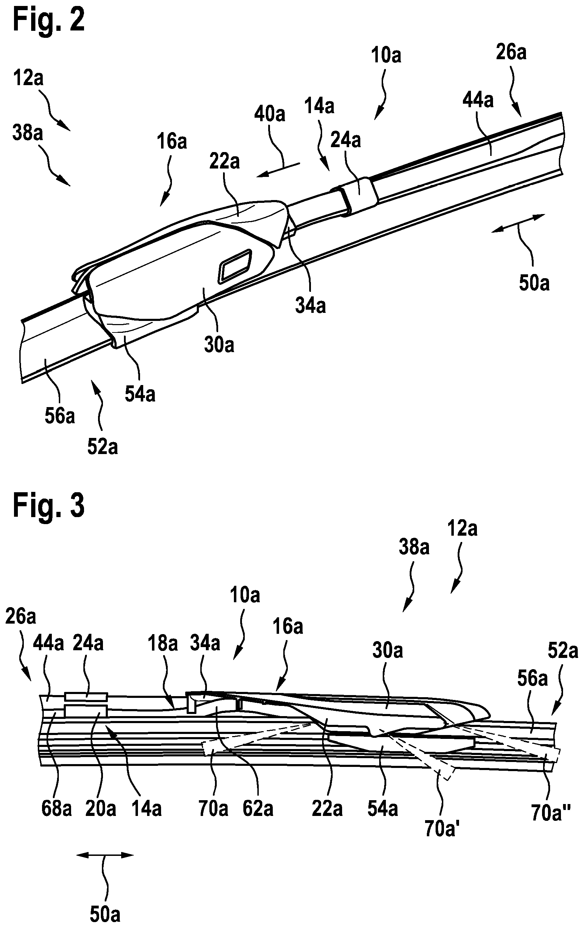

Die Düseneinheit 16a ist zu einem Aufbringen von Wischflüssigkeit auf eine Fahrzeugscheibe vorgesehen. Die Düseneinheit 16a ist zu einem direkten Aufbringen von Wischflüssigkeit auf eine Fahrzeugscheibe vorgesehen. Die Düseneinheit 16a weist dazu mehrere nicht weiter sichtbare Düsen auf, welche zu einem Verteilen der Wischflüssigkeit vorgesehen sind. Grundsätzlich wäre auch denkbar, dass die Düseneinheit 16a lediglich eine Düse aufweist. Die Düseneinheit 16a weist beispielhaft drei Düsen auf, die jeweils zu einer Erzeugung eines Wischflüssigkeitsstrahls 70a, 70a', 70a" vorgesehen sind. Die Düseneinheit 16a weist ferner ein Gehäuse 22a auf, in welchem die Düsen aufgenommen sind. Das Gehäuse 22a ist von einem separaten Gehäuse gebildet. Das Gehäuse 20a der Ventileinheit 14a ist getrennt von dem Gehäuse 22a der Düseneinheit 16a ausgebildet. Das Gehäuse 22a der Düseneinheit 16a weist ferner einen nicht weiter sichtbaren Anschluss zu einem Anschluss der Wischarmschlaucheinheit 18a auf. Der Anschluss dient zu einem Anschluss des Wischarmschlauchelements 62a, welches auch mit einer Auslassseite der Ventileinheit 14a gekoppelt ist. Das Wischarmschlauchelement 62a ist mit einem ersten Ende mit der Ventileinheit 14a und mit einem zweiten Ende mit der Düseneinheit 16a gekoppelt. Das Wischarmschlauchelement 62a ist teilweise in dem Gehäuse 22a der Düseneinheit 16a geführt. Das Gehäuse 22a der Düseneinheit 16a ist von einem Kunststoffgehäuse gebildet. Das Gehäuse 20a ist dazu vorgesehen, eine Seite des Wischarmadapters 30a teilweise zu umgreifen und an diesen anzuliegen. Eine dem Wischarmadapter 30a zugewandte Seite des Gehäuses 20a ist an eine Form des Wischarmadapters 30a angepasst. Die Düseneinheit 16a ist in einem montierten Zustand direkt an den Wischarmadapter 30a angrenzend angeordnet. Eine Form des Gehäuses 22a einer Düseneinheit 16a der Wischarmsprühvorrichtung 10a geht in einem montierten Zustand der Düseneinheit 16a teilweise in eine Form eines Wischarmadapters 30a des Wischarms 12a über. Das Gehäuse 22a der Düseneinheit 16a weist in einem Übergangsbereich, in welchem die Düseneinheit 16a an den Wischarmadapter 30a angrenzt, zumindest eine Fläche auf, welche sich in dem Übergangsbereich parallel zu einer angrenzenden Fläche des Wischarmadapters 30a erstreckt. Ferner beträgt ein vertikaler Versatz zwischen der Düseneinheit 16a und dem Wischarmadapter 30a weniger als 2 mm. Des Weiteren ist die Düseneinheit 16a auf einer windabgewandten Seite des Wischarmadapters 30a, insbesondere ausgehend von einem sich in einer Ruhelage befindenden Wischarm 12a bei frontal wirkendem Fahrtwind, angeordnet. Ein höchster Punkt der Düseneinheit 16a ist ferner niedriger als ein höchster Punkt des Wischarmadapters 30a (Figur 2, 3, 4).

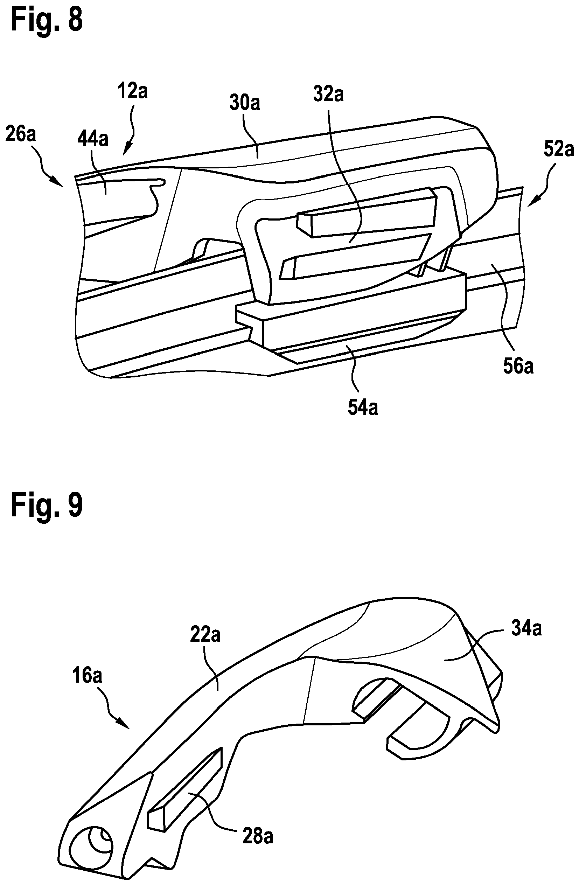

Ferner weist die Düseneinheit 16a ein Kopplungselement 28a auf, welches zu einer Kopplung der Düseneinheit 16a mit einem Wischarmadapter 30a des Wischarms 12a vorgesehen ist. Das Kopplungselement 28a ist dazu vorgesehen, die Düseneinheit 16a an dem Wischarmadapter 30a des Wischarms 12a zu befestigen. Das Kopplungselement 28a ist zu einer formschlüssigen Fixierung der Düseneinheit 16a an dem Wischarmadapter 30a vorgesehen. Das Kopplungselement 28a der Düseneinheit 16a ist an dem Gehäuse 22a der Düseneinheit 16a angeordnet. Das Kopplungselement 28a ist einstückig mit dem Gehäuse 22a der Düseneinheit 16a ausgebildet. Das Kopplungselement 28a der Düseneinheit 16a ist von einer Fixierrippe gebildet ist, welche dazu vorgesehen ist, in eine Fixiernut 32a des Wischarmadapters 30a des Wischarms 12a einzugreifen. Die Fixierrippe ist von einer Schwalbenschwanzfixierrippe gebildet, welche einen schwalbenschwanzförmigen Querschnitt aufweist. Grundsätzlich wäre jedoch auch eine andere, einem Fachmann als sinnvoll erscheinende Formgebung der Fixierrippe denkbar. Die Fixiernut 32a des Wischarmadapters 30a ist auf einer Außenseite des Wischarmadapters 30a angeordnet. Die Fixiernut 32a ist von einer Schwalbenschwanzfixiernut gebildet, welche ebenfalls einen schwalbenschwanzförmigen Querschnitt aufweist. Die Düseneinheit 16a wird bei einer Montage parallel zu einer Haupterstreckungsrichtung des Kopplungselements 28a auf den Wischarmadapter 30a aufgeschoben. Die Haupterstreckungsrichtung des Kopplungselements 28a erstreckt sich im Wesentlichen parallel zu einer Haupterstreckungsrichtung der Wischstange 26a bzw. der Haupterstreckungsrichtung 50a des Wischarms 12a (Figur 8, 9, 10).

Des Weiteren weist die Düseneinheit 16a zumindest ein weiteres Kopplungselement 34a auf, welches zu einer Kopplung der Düseneinheit 16a mit einer Wischstange 26a des Wischarms 12a vorgesehen ist. Das weitere Kopplungselement 34a ist von einem Clip gebildet. Das weitere Kopplungselement 34a ist von einem C-förmigen Clip gebildet, der zu einem Umgreifen der Wischstange 26a des Wischarms 12a vorgesehen ist. Das weitere Kopplungselement 34a bildet dazu einen Aufnahmebereich zu einer Aufnahme der Wischstange 26a aus. Das weitere Kopplungselement 34a ist zu einer Kopplung mit dem zweiten Wischarmsegment 44a vorgesehen. Das weitere Kopplungselement 34a der Düseneinheit 16a ist einstückig mit dem Gehäuse 22a der Düseneinheit 16a ausgebildet (Figur 7, 9).

Bei einer Montage des Systems 38a wird in einem ersten Schritt die Wischarmsprühvorrichtung 10a an der Wischstange 26a befestigt. Dazu wird die Ventileinheit 14a mittels des Kopplungselements 24a und die Düseneinheit 16a mittels des weiteren Kopplungselements 34a an der Wischstange 26a befestigt. Anschließend wird in einem weiteren Schritt der Wischarmadapter 30a auf die Wischstange 26a aufgeschoben. Der Wischarmadapter 30a verrastet dabei beispielhaft mit der Wischstange 26a. Bei einer Montage des Wischarmadapters 30a wird gleichzeitig die Düseneinheit 16a mittels des Kopplungselements 28a mit dem Wischarmadapter 30a gekoppelt. Eine Kopplungsrichtung des Wischarmadapters 30a mit der Wischstange 26a entspricht dazu einer Kopplungsrichtung des Kopplungselements 28a mit dem Wischarmadapter 30a (Figur 7).

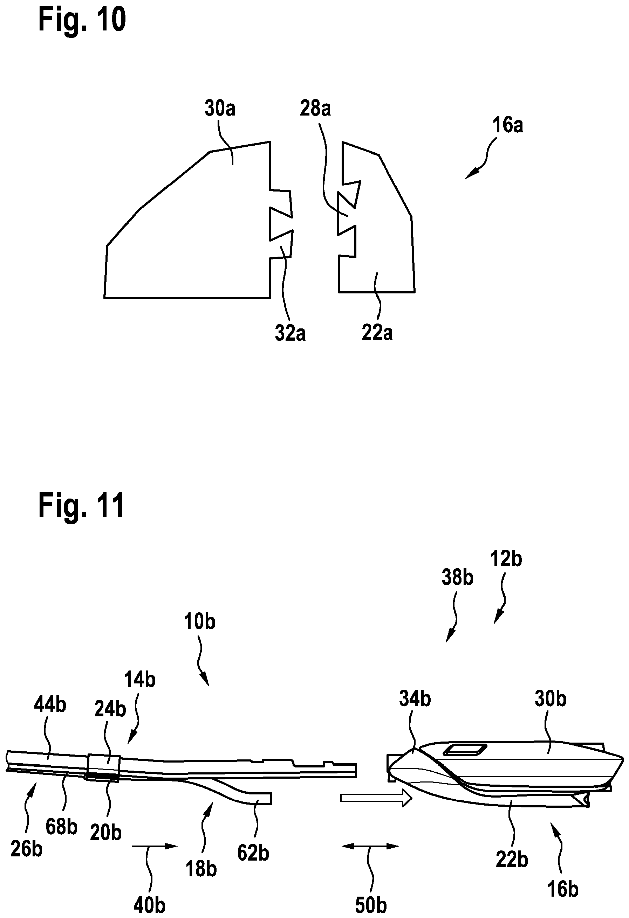

In der Figur 11 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 10 verwiesen werden kann. Zur Unterscheidung der Ausführungsbeispiele ist der Buchstabe a in den Bezugszeichen des Ausführungsbeispiels in den Figuren 1 bis 10 durch den Buchstaben b in den Bezugszeichen des Ausführungsbeispiels der Figur 11 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 10 verwiesen werden.

Figur 11 zeigt einen Teilausschnitt eines Systems 38b mit einem Wischarm 12b und mit einer Wischarmsprühvorrichtung 10b. Die Wischarmsprühvorrichtung 10b ist zu einer Reinigung der Fahrzeugscheibe vorgesehen. Ferner ist die Wischarmsprühvorrichtung 10b zu einer Kopplung mit dem Wischarm 12b vorgesehen. Die Wischarmsprühvorrichtung 10b weist eine Ventileinheit 14b auf. Ferner weist die Wischarmsprühvorrichtung 10b eine Düseneinheit 16b auf.

Die Düseneinheit 16b ist zu einem direkten Aufbringen von Wischflüssigkeit auf eine Fahrzeugscheibe vorgesehen. Die Düseneinheit 16b weist ferner ein Gehäuse 22b auf, in welches Düsen aufgenommen sind. Ein Gehäuse 20b der Ventileinheit 14b ist getrennt von dem Gehäuse 22b der Düseneinheit 16b ausgebildet. Die Düseneinheit 16b der Wischarmsprühvorrichtung 10b ist einstückig mit einem Wischarmadapter 30b des Wischarms 12b ausgebildet. Die Düseneinheit 16b der Wischarmsprühvorrichtung 10b ist fest mit dem Wischarmadapter 30b des Wischarms 12b verbunden.

Des Weiteren weist die Düseneinheit 16b zumindest ein weiteres Kopplungselement 34b auf, welches zu einer Kopplung der Düseneinheit 16b mit einer Wischstange 26b des Wischarms 12b vorgesehen ist. Das weitere Kopplungselement 34b ist von einem Clip gebildet. Das weitere Kopplungselement 34b ist von einem C-förmigen Clip gebildet, der zu einem Umgreifen der Wischstange 26b des Wischarms 12b vorgesehen ist. Das weitere Kopplungselement 34b bildet dazu einen Aufnahmebereich zu einer Aufnahme der Wischstange 26b aus. Das weitere Kopplungselement 34b ist zu einer Kopplung mit dem zweiten Wischarmsegment 44b vorgesehen. Das weitere Kopplungselement 34b der Düseneinheit 16b ist einstückig mit dem Gehäuse 22b der Düseneinheit 16b ausgebildet.

Bei einer Montage des Systems 38b wird in einem ersten Schritt ein Teil der Wischarmsprühvorrichtung 10b an der Wischstange 26b befestigt. Dazu wird die Ventileinheit 14b mittels des Kopplungselements 24b zusammen mit der Wischarmschlaucheinheit 18b an der Wischstange 26b befestigt. Anschließend wird in einem weiteren Schritt der Wischarmadapter 30b zusammen mit der Düseneinheit 16a auf die Wischstange 26b aufgeschoben. Der Wischarmadapter 30b verrastet dabei beispielhaft mit der Wischstange 26b. Ferner wird die Wischarmschlaucheinheit 18b dabei automatisch mit der Düseneinheit 16a gekoppelt. Das Wischarmschlauchelement 62b wird mit einem von der Ventileinheit 14b angewandten Ende mit der Düseneinheit 16b gekoppelt.

## Patentansprüche

1. Wischarmsprühvorrichtung (10a; 10b) zu einer Kopplung mit einem Wischarm (12a; 12b), mit zumindest einer Ventileinheit (14a; 14b), welche zu einer Versorgung einer Düseneinheit (16a; 16b) mit Wischflüssigkeit vorgesehen ist, wobei die Ventileinheit (14a; 14b) dazu vorgesehen ist, in eine Wischarmschlaucheinheit (18a; 18b) integriert zu werden mit einer eine Düseneinheit (16a; 16b), welche zu einem Aufbringen von Wischflüssigkeit auf eine Fahrzeugscheibe vorgesehen ist, wobei die Ventileinheit (14a; 14b) ein Gehäuse (20a; 20b) aufweist, welches getrennt von einem Gehäuse (22a; 22b) der Düseneinheit (16a; 16b) ausgebildet ist, wobei die Düseneinheit (16a) zumindest ein Kopplungselement (28a) aufweist, welches zu einer Kopplung der Düseneinheit (16a) mit einem Wischarmadapter (30a) des Wischarms (12a) vorgesehen ist, **dadurch gekennzeichnet, dass** die Düseneinheit (16a; 16b) zumindest ein weiteres Kopplungselement (34a; 34b) aufweist, welches zu einer Kopplung der Düseneinheit (16a; 16b) mit einer Wischstange (26a; 26b) des Wischarms (12a; 12b) vorgesehen ist.

2. Wischarmsprühvorrichtung nach Anspruch 1,
**dadurch gekennzeichnet, dass**
die Ventileinheit (14a; 14b) zumindest ein Kopplungselement (24a) aufweist, welches zu einer Kopplung der Ventileinheit (14a; 14b) mit einer Wischstange (26a; 26b) des Wischarms (12a; 12b) vorgesehen ist.

3. Wischarmsprühvorrichtung nach Anspruch 2,
**dadurch gekennzeichnet, dass**
das Kopplungselement (24a) der Ventileinheit (14a; 14b) einstückig mit dem Gehäuse (20a; 20b) der Ventileinheit (14a; 14b) ausgebildet ist.

4. Wischarmsprühvorrichtung nach Anspruch 1,
**dadurch gekennzeichnet, dass**
das Kopplungselement (28a) der Düseneinheit (16a) von einer Fixierrippe gebildet ist, welche dazu vorgesehen ist, in eine Fixiernut (32a) des Wischarmadapters (30a) des Wischarms (12a) einzugreifen.

5. Wischarmsprühvorrichtung nach einem der vorhergehenden Ansprüche,
**dadurch gekennzeichnet, dass**
die Ventileinheit (14a; 14b) zumindest ein als Entenschnabelventil ausgebildetes Ventil (36a) umfasst.

6. System (38a; 38b) mit einem Wischarm (12a; 12b) und mit einer Wischarmsprühvorrichtung (10a; 10b) nach einem der vorhergehenden Ansprüche.

7. System nach Anspruch 6,
**dadurch gekennzeichnet, dass**
eine Form eines Gehäuses (22a) einer Düseneinheit (16a) der Wischarmsprühvorrichtung (10a) in einem montierten Zustand der Düseneinheit (16a) zumindest teilweise in eine Form eines Wischarmadapters (30a) des Wischarms (12a) übergeht.

8. System nach Anspruch 6 oder 7,
**dadurch gekennzeichnet, dass**
die Düseneinheit (16b) der Wischarmsprühvorrichtung (10b) zumindest teilweise einstückig mit dem Wischarmadapter (30b) des Wischarms (12b) ausgebildet ist.

9. System nach einem der Ansprüche 6 bis 8,
**dadurch gekennzeichnet, dass**
die Ventileinheit (14a; 14b) der Wischarmsprühvorrichtung (10a; 10b) in Strömungsrichtung (40a; 40b) vor dem Wischarmadapter (30a; 30b) angeordnet ist.

10. System nach Anspruch 9,
**dadurch gekennzeichnet, dass**
ein minimaler Abstand zwischen der Ventileinheit (14a; 14b) und dem Wischarmadapter (30a; 30b) zumindest 1 cm beträgt.

## Claims

1. Wiper arm spraying device (10a; 10b) for coupling to a wiper arm (12a; 12b), comprising at least one valve unit (14a; 14b) which is provided for supplying a nozzle unit (16a; 16b) with wiper fluid, wherein the valve unit (14a; 14b) is provided to be integrated in a wiper arm hose unit (18a; 18b), comprising a nozzle unit (16a; 16b) which is provided for applying wiper fluid to a vehicle window, wherein the valve unit (14a; 14b) has a housing (20a; 20b) which is formed separately from a housing (22a; 22b) of the nozzle unit (16a; 16b), wherein the nozzle unit (16a) has at least one coupling element (28a) which is provided for coupling the nozzle unit (16a) to a wiper arm adapter (30a) of the wiper arm (12a), **characterized in that** the nozzle unit (16a; 16b) has at least one further coupling element (34a; 34b) which is provided for coupling the nozzle unit (16a; 16b) to a wiper rod (26a; 26b) of the wiper arm (12a; 12b).

2. Wiper arm spraying device according to Claim 1,
**characterized in that**
the valve unit (14a; 14b) has at least one coupling element (24a) which is provided for coupling the valve unit (14a; 14b) to a wiper rod (26a; 26b) of the wiper arm (12a; 12b).

3. Wiper arm spraying device according to Claim 2,
**characterized in that**
the coupling element (24a) of the valve unit (14a; 14b) is formed in one piece with the housing (20a; 20b) of the valve unit (14a; 14b).

4. Wiper arm spraying device according to Claim 1,
**characterized in that**
the coupling element (28a) of the nozzle unit (16a) is formed by a fixing rib which is provided to engage in a fixing groove (32a) of the wiper arm adapter (30a) of the wiper arm (12a).

5. Wiper arm spraying device according to one of the preceding claims,
**characterized in that**
the valve unit (14a; 14b) comprises at least one valve (36a) in the form of a duckbill valve.

6. System (38a; 38b) comprising a wiper arm (12a; 12b) and comprising a wiper arm spraying device (10a; 10b) according to one of the preceding claims.

7. System according to Claim 6,
**characterized in that,**
in a mounted state of a nozzle unit (16a), a shape of a housing (22a) of the nozzle unit (16a) of the wiper arm spraying device (10a) at least partially merges into a shape of a wiper arm adapter (30a) of the wiper arm (12a).

8. System according to Claim 6 or 7,
**characterized in that**
the nozzle unit (16b) of the wiper arm spraying device (10b) is formed at least partially in one piece with the wiper arm adapter (30b) of the wiper arm (12b).

9. System according to one of Claims 6 to 8,
**characterized in that**
the valve unit (14a; 14b) of the wiper arm spraying device (10a; 10b) is arranged upstream of the wiper arm adapter (30a; 30b) in the flow direction (40a; 40b) .

10. System according to Claim 9,
**characterized in that**
a minimum distance between the valve unit (14a; 14b) and the wiper arm adapter (30a; 30b) is at least 1 cm.

## Revendications

1. Dispositif de pulvérisation de bras d'essuie-glace (10a ; 10b) destiné à être accouplé à un bras d'essuie-glace (12a ; 12b), muni d'au moins une unité de soupape (14a ; 14b), qui est prévue pour alimenter une unité de buse (16a ; 16b) en liquide d'essuie-glace, l'unité de soupape (14a ; 14b) étant prévue pour être intégrée dans une unité de tuyau de bras d'essuie-glace (18a ; 18b) avec une unité de buse (16a ; 16b), qui est prévue pour appliquer du liquide d'essuie-glace sur une vitre de véhicule, l'unité de soupape (14a ; 14b) comprenant un boîtier (20a ; 20b), qui est configuré séparément d'un boîtier (22a ; 22b) de l'unité de buse (16a ; 16b), l'unité de buse (16a) comprenant au moins un élément d'accouplement (28a), qui est prévu pour accoupler l'unité de buse (16a) avec un adaptateur de bras d'essuie-glace (30a) du bras d'essuie-glace (12a), **caractérisé en ce que** l'unité de buse (16a ; 16b) comprend au moins un élément d'accouplement supplémentaire (34a ; 34b), qui est prévu pour accoupler l'unité de buse (16a ; 16b) avec une tige d'essuie-glace (26a ; 26b) du bras d'essuie-glace (12a ; 12b).

2. Dispositif de pulvérisation de bras d'essuie-glace selon la revendication 1, **caractérisé en ce que** l'unité de soupape (14a ; 14b) comprend au moins un élément d'accouplement (24a), qui est prévu pour accoupler l'unité de soupape (14a ; 14b) avec une tige d'essuie-glace (26a ; 26b) du bras d'essuie-glace (12a ; 12b).

3. Dispositif de pulvérisation de bras d'essuie-glace selon la revendication 2, **caractérisé en ce que** l'élément d'accouplement (24a) de l'unité de soupape (14a ; 14b) est configuré d'un seul tenant avec le boîtier (20a ; 20b) de l'unité de soupape (14a ; 14b).

4. Dispositif de pulvérisation de bras d'essuie-glace selon la revendication 1, **caractérisé en ce que** l'élément d'accouplement (28a) de l'unité de buse (16a) est formé par une nervure de fixation, qui est prévue pour pénétrer dans une rainure de fixation (32a) de l'adaptateur de bras d'essuie-glace (30a) du bras d'essuie-glace (12a).

5. Dispositif de pulvérisation de bras d'essuie-glace selon l'une quelconque des revendications précédentes, **caractérisé en ce que** l'unité de soupape (14a ; 14b) comporte au moins une soupape (36a) configurée en tant que soupape à bec de canard.

6. Système (38a ; 38b) muni d'un bras d'essuie-glace (12a ; 12b) et muni d'un dispositif de pulvérisation de bras d'essuie-glace (10a ; 10b) selon l'une quelconque des revendications précédentes.

7. Système selon la revendication 6, **caractérisé en ce qu'une** forme d'un boîtier (22a) d'une unité de buse (16a) du dispositif de pulvérisation de bras d'essuie-glace (10a) est au moins partiellement en continuité dans un état monté de l'unité de buse (16a) avec une forme d'un adaptateur de bras d'essuie-glace (30a) du bras d'essuie-glace (12a).

8. Système selon la revendication 6 ou 7, **caractérisé en ce que** l'unité de buse (16b) du dispositif de pulvérisation de bras d'essuie-glace (10b) est configurée au moins partiellement d'un seul tenant avec l'adaptateur de bras d'essuie-glace (30b) du bras d'essuie-glace (12b).

9. Système selon l'une quelconque des revendications 6 à 8, **caractérisé en ce que** l'unité de soupape (14a ; 14b) du dispositif de pulvérisation de bras d'essuie-glace (10a ; 10b) est agencée dans la direction d'écoulement (40a ; 40b) avant l'adaptateur de bras d'essuie-glace (30a ; 30b).

10. Système selon la revendication 9, **caractérisé en ce qu'**un écart minimal entre l'unité de soupape (14a ; 14b) et l'adaptateur de bras d'essuie-glace (30a ; 30b) est d'au moins 1 cm.
